Europäisches Patentamt

European Patent Office

Office européen des brevets

(19)

(11) **EP 0 786 361 B1**

(12) **FASCICULE DE BREVET EUROPEEN**

(45) Date de publication et mention
de la délivrance du brevet:
**02.01.2002 Bulletin 2002/01**

(51) Int Cl.$^7$: **B60C 23/04**

(21) Numéro de dépôt: **97100234.0**

(22) Date de dépôt: **09.01.1997**

(54) **Procédé d'exploitation des signaux dans un système de surveillance des pneumatiques d'un véhicule en roulage**

Verfahren zur Auswertung von Signalen einer Reifendruck-Überwachungsvorrichtung eines fahrenden Fahrzeugs

Method for processing signals in a tyre monitoring system of a running vehicle

(84) Etats contractants désignés:
**DE ES FR GB IT**

(30) Priorité: **26.01.1996 FR 9601115**
**06.03.1996 FR 9603005**

(43) Date de publication de la demande:
**30.07.1997 Bulletin 1997/31**

(73) Titulaire: **COMPAGNIE GENERALE DES ETABLISSEMENTS MICHELIN-MICHELIN & CIE F-63040 Clermont-Ferrand Cédex 01 (FR)**

(72) Inventeurs:
• **Chamussy, Jean-François**
**41000 Blois (FR)**
• **Francois, Jean-Pierre**
**63540 Romagnat (FR)**
• **Meunier, André**
**63370 Lempdes (FR)**

(74) Mandataire: **Dequire, Philippe Jean-Marie Denis Michelin & Cie, Service SGD/LG/PI-LAD 63040 Clermont Ferrand Cedex 9 (FR)**

(56) Documents cités:
EP-A- 0 315 885    EP-A- 0 341 226
FR-A- 2 680 137    US-A- 4 703 650

## Description

La présente invention se rapporte à un procédé d'exploitation dans un système de surveillance des pneumatiques. Plus particulièrement, elle concerne l'exploitation des mesures faites sur les pneumatiques en vue de donner une ou plusieurs alarmes.

De très nombreux dispositifs, tels celui du brevet US 4 703 650 ont été proposés pour transmettre à une unité centrale en permanence des mesures de pression de gonflage de chaque pneumatique accompagnées, le cas échéant, de mesures de la température de l'air interne des pneumatiques.

Mais, la connaissance des pressions de gonflage ne suffit pas pour donner au conducteur une information fiable et utile. La consultation permanente de ces indications risque plus d'être fastidieuse que réellement utile. En effet, les mesures de pression et/ou de température des pneumatiques varient énormément en roulage en raison de l'échauffement des pneumatiques dû à ses pertes hystérétiques, de l'influence de la chaleur dégagée par les freins et des transferts de charge qui provoquent de légères variations du volume des pneumatiques.

C'est pourquoi on a proposé, dans le brevet US 4 893 110 un procédé d'exploitation des mesures basé sur des comparaisons entre deux ou plus de deux pneumatiques qui vise à pouvoir donner une alarme en cas de défaillance d'un pneumatique sans adopter des seuils d'alerte s'écartant trop de la précision atteinte par les dispositifs de mesure.

Ce traitement, en dépit de son intérêt, n'a pas résolu complètement le problème. En effet, l'amélioration de la précision de la détection en cas de défaillance d'un pneumatique nécessite que les pressions initiales des pneumatiques soient rigoureusement identiques. Dans la réalité, tel n'est pas du tout le cas et il est tout à fait usuel et normal d'observer des différences de pression de gonflage à froid de l'ordre de 10% voire 15%. C'est d'ailleurs la plage acceptée par l'Organisation Technique Européenne du Pneumatique et de la Jante (ETRTO) en poids lourd, pour exemple. Ces différence sont dues notamment à la précision des manomètres de gonflage de l'ordre de 5%, aux imprécisions lors du gonflage de l'ordre de 3%, aux conséquences de l'ensoleillement de l'un des pneumatiques, etc. Le procédé décrit dans la demande citée ne peut donc pas avoir une précision de détection meilleure que les écarts initiaux usuels si l'on ne veut pas induire de nombreuses fausses alarmes. En conséquence, une détection de la défaillance de l'un des pneumatiques ne peut être faite qu'après une diminution très notable de la pression de gonflage du pneumatique ce qui impose une action de réparation immédiate.

Le document EP 0 341 226 A2 (état de technique le plus proche) propose un procédé d'exploitation des mesures de pression de gonflage d'un système de surveillance de la pression de gonflage des pneumatiques d'un véhicule consistant à enregistrer périodiquement la pression de gonflage de chaque pneumatique et à surveiller les taux de variation de la pression de gonflage de ce pneumatique pour détecter la présence d'une fuite et alerter le conducteur.

L'invention a pour objet un procédé d'exploitation des signaux de mesure d'un système de surveillance des pneumatiques qui détecte de façon beaucoup plus précoce et en roulage toute défaillance de l'un des pneumatiques.

Un autre objet de l'invention est de fournir une information fiable et différenciée en fonction de l'évolution de l'état de gonflage des pneumatiques due à une défaillance.

Selon l'invention, le procédé d'exploitation des signaux dans un système de surveillance des pneumatiques d'un véhicule en roulage, ledit système délivrant pour chaque pneumatique au moins une grandeur caractéristique de l'état de gonflage dudit pneumatique, est tel que :

- à partir des mesures effectuées sensiblement en même temps, on compare la grandeur caractéristique d'un pneumatique avec la grandeur caractéristique d'au moins un autre pneumatique,
- on enregistre périodiquement le résultat de cette comparaison pour obtenir une série de valeurs,

- on déclenche une alerte lorsque la variation dans le temps de cette série de valeurs satisfait une relation prédéterminée.

Ce procédé utilise comme critère de déclenchement d'une alerte, non un écart entre des mesures caractéristiques de l'état de gonflage d'au moins deux pneumatiques, mais la variation dans le temps de cet écart. Cela a l'avantage de supprimer toutes les fausses alarmes liées aux différences initiales de gonflage des pneumatiques et ainsi d'améliorer considérablement la précision effective de la détection d'une défaillance.

Ce procédé est un complément remarquable à la classique surveillance individuelle des pneumatiques relativement à au moins un seuil critique donné dont l'objectif est de vérifier à tout instant que les pressions de gonflage sont à l'intérieur d'une fourchette de sécurité (cela nécessite d'utiliser plusieurs seuils), ou au-delà d'un seuil critique de sécurité.

Préférentiellement, on utilise comme grandeur caractéristique de l'état de gonflage des pneumatiques la mesure directe de la pression de gonflage. C'est en effet la pression de gonflage qui est directement reliée à la flèche des pneumatiques dans des conditions de charge données et donc à leur fatigue en roulage.

La comparaison effectuée peut consister à calculer un écart des grandeurs caractéristiques entre les deux pneumatiques d'un même essieu du véhicule. Cette comparaison peut aussi mettre enjeu deux essieux ou plus, soit par exemple :

- effectuer la somme de la grandeur caractéristique d'un pneumatique d'un premier essieu avec la grandeur caractéristique d'un pneumatique d'un second essieu,

- effectuer la somme de la grandeur caractéristique du second pneumatique du premier essieu avec la grandeur caractéristique du second pneumatique du second essieu, et

- calculer la différence entre ces deux sommes.

Avantageusement, on déclenche une alerte lorsque la variation dans le temps de la série de valeurs dépasse, en valeur absolue, un seuil S donné. Et ce seuil peut être compris entre 3 et 7 % et préférentiellement entre 3 et 5 % de la valeur nominale de la grandeur caractéristique.

On constate ainsi que, dès que l'on observe une variation d'écart supérieure à, par exemple, 5% de sa valeur nominale, on peut détecter une défaillance probable de l'un des pneumatiques du véhicule. Cette détection peut ainsi être faite le plus souvent avant que la pression effective de gonflage soit même descendue en dessous de la pression nominale à froid.

Selon un mode de réalisation de l'invention, on constitue ladite série de valeurs en enregistrant périodiquement les résultats de la comparaison et en conservant les N dernières valeurs couvrant une période totale T, on effectue une régression linéaire desdits N enregistrements, on calcule la pente $a$ de la droite de régression linéaire, et on déclenche une alerte si la pente $a$ est supérieure, en valeur absolue, au rapport entre le seuil S et la période totale T. On peut limiter le nombre d'enregistrements de la série de mesure à 10 par exemple.

Avantageusement, on constitue en même temps plusieurs séries de valeurs de périodes totales T différentes pour couvrir l'ensemble des gammes observées des cinétiques de dégonflement des pneumatiques de la minute à quelques jours et plus. Par exemple $T_1 = 1$ mn, $T_2 = 10$ mn, $T_3 = 1$ heure, $T_4 = 12$ heures et $T_5 = 3$ jours etc.. Ainsi, on peut détecter des débits de fuite très variables, des plus rapides aux plus lents.

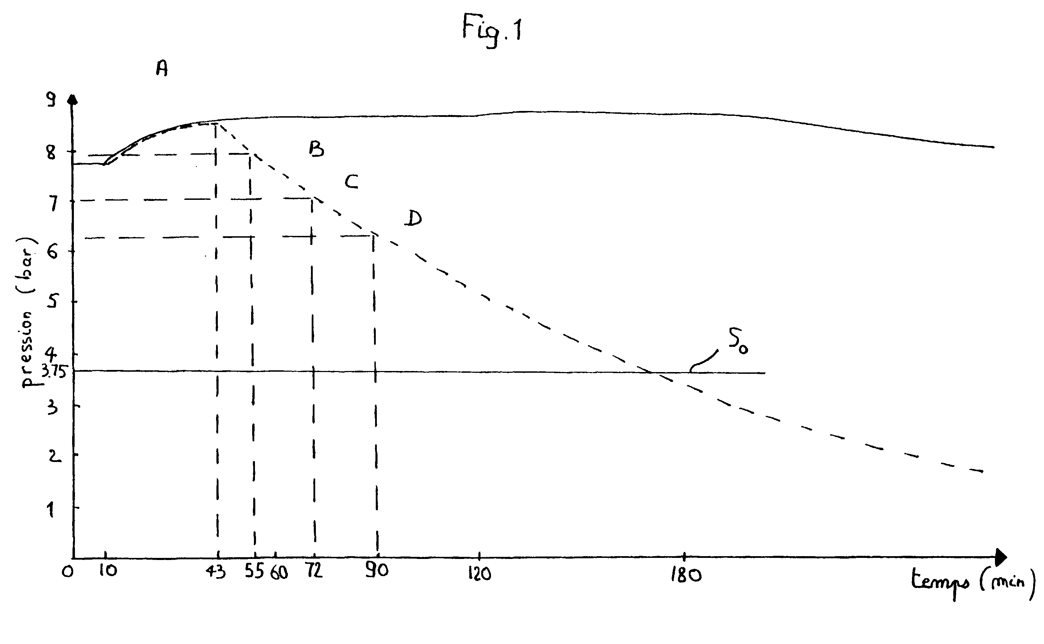

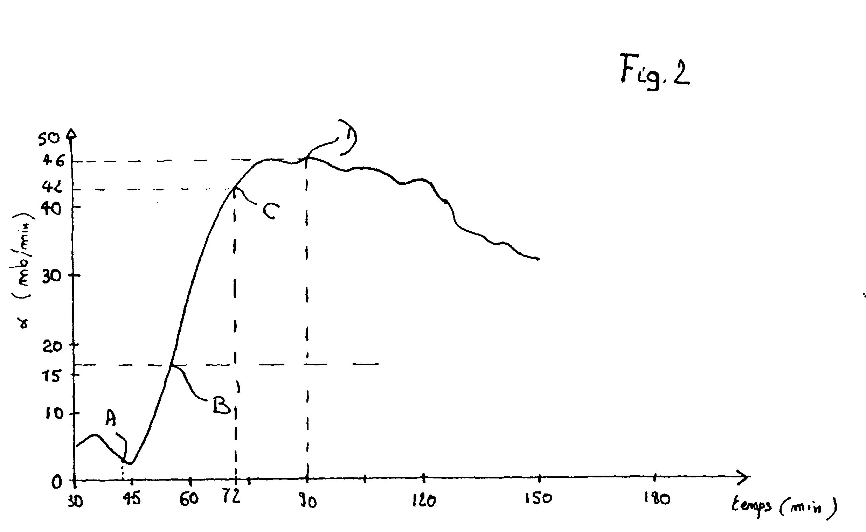

Un exemple d'application du procédé de l'invention est maintenant illustré avec les figures 1 et 2 suivantes

- la figure 1 présente l'évolution de la pression de gonflage de deux pneumatiques d'un même essieu d'un véhicule poids lourd; et

- la figure 2 présente l'évolution correspondante de la pente $a$ calculée selon le procédé de l'invention.

A l'arrêt, les deux pneumatiques ont une pression de gonflage de 7,6 bar, très proche de la pression nominale de gonflage $P_{nom} = 7,5$ bar.

Au début du roulage, les deux pressions de gonflage augmentent naturellement jusqu'à 8,3 bar à cause des pertes hystérétiques des pneumatiques.

Puis, après environ 43 minutes de roulage, une fuite intervient dans l'un des pneumatiques (point A). Le débit initial de la fuite est de 50 mb/min.

En considérant un temps total T de 30 minutes, et un seuil de 0,5 bar, le système mesure toutes les trois minutes environ les valeurs des pressions de gonflage des deux pneumatiques, calcule la différence entre ces deux valeurs, l'enregistre, détermine un régression linéaire des dernières 10 valeurs enregistrées et calcule la pente $a$ de cette droite de régression linéaire. La figure 2 présente l'évolution dans le temps de cette pente $a$.

La première valeur de $a$ est calculée lorsque le système a enregistré 10 valeurs. Les pentes initiales calculées sont de l'ordre de 5 mb/min. Six minutes après le début de la fuite, une augmentation de la pente calculée peut être observée et douze minutes plus tard, la valeur du seuil de 500 / 30 = 16,6 mb/min est franchie et une alarme est transmise au conducteur par le système.

A ce moment B, il est très intéressant de noter que la valeur de la pression de gonflage dans le pneumatique défectueux est de 7,8 bar, valeur toujours supérieure à la pression nominale de gonflage.

Avantageusement, il est souhaitable de conserver en mémoire non volatile l'ensemble des séries de valeurs des régressions lors de l'arrêt du véhicule. Cela a l'avantage de permettre de poursuivre immédiatement les analyses des séries de valeur correspondant aux périodes les plus longues et donc d'améliorer de façon considérable l'efficacité de la détection des débits de fuite les plus lents.

Il est aussi possible de ne pas tenir compte dans les régressions des temps d'arrêt du véhicule. Cela permet de profiter de l'effet d'accélération dû à la fuite pendant tout le temps de l'arrêt. Cela accélère la détection d'une fuite.

Ce mode de réalisation permet d'enrichir considérablement la pertinence des informations transmises au conducteur. En effet, après avoir déclenché une alerte :

- on détermine, parmi les pneumatiques concernés par ladite comparaison, le pneumatique dont la grandeur caractéristique est minimale,

- on calcule, à partir de la valeur de la pente a, une estimation du temps nécessaire pour que la grandeur caractéristique dudit pneumatique descende en dessous d'un seuil critique $S_0$,

- on transmet au conducteur du véhicule cette estimation.

Cette estimation transmise donne au conducteur une information, constamment réactualisée à chaque nouvel enregistrement d'un résultat de comparaison, de l'autonomie de roulage qui lui reste avant de devoir, selon le seuil critique choisi, soit limiter sa vitesse de roulage, soit s'arrêter pour réparer la fuite.

La figure 1 illustre ce calcul d'autonomie. Au point C, 72 minutes après le début du roulage et 29 minutes après le début de la fuite, la pression de gonflage du pneumatique défectueux est de 7 bar. La valeur donnée par le système de la pente *a* est alors de 42 mb/min (figure 2), et il calcule une estimation $A_c$ du temps nécessaire pour que la pression de gonflage tombe sous un seuil critique $S_0$ choisi à la moitié de la pression nominale 3,75 bar.

$A_c$ est égal au rapport entre la pression actuelle du pneumatique diminuée du seuil $S_0$ et la pente *a* :

$$A_c = (7,0 - 3,75) * 1000/42 = 77 \text{ min.}$$

Quelques minutes plus tard, au point D, 90 minutes après le début du roulage, la pression de gonflage est devenue 6,3 bar et la pente *a* = 46 mb/min. L'estimation est maintenant de $A_c$ = 55 min.

Comme précédemment, il est souhaitable de conserver en mémoire non volatile l'ensemble des séries de valeurs des régressions lors de l'arrêt du véhicule. Mais, contrairement au cas de la détection des fuites, pour obtenir une bonne précision du calcul de l'autonomie restante, il est préférable de tenir compte des temps d'arrêt du véhicule.

L'expérience a cependant montré qu'une telle information de l'autonomie de roulage disponible n'est pas aussi fiable qu'il serait souhaitable. La raison de ce manque de fiabilité est que, lorsqu'un pneumatique est perforé par un objet tel qu'une vis ou un écrou, la fuite qui en résulte commence par être très lente, en général inférieure à un débit de l'ordre de 10 mbar/h. Mais, si cet objet est éjecté en dehors du pneumatique, alors le débit de fuite devient brutalement beaucoup plus élevé pour atteindre des valeurs au minimum de 10 mbar/s. Dans ces conditions, la mise à plat du pneumatique concerné est très rapide.

En conséquence, il est souhaitable, pour fiabiliser l'estimation de l'autonomie restante dont dispose un conducteur après le déclenchement d'une alerte, de demander immédiatement à ce conducteur de limiter sa vitesse de telle sorte que l'éjection de l'objet responsable de la fuite devienne très improbable ou moins risquée. Une vitesse maximale de l'ordre de 100 km/h réduit déjà de façon sensible les risques d'éjection.

Comme nous l'avons vu, le procédé selon l'invention utilise préférentiellement comme grandeur caractéristique de l'état de gonflage des pneumatiques la mesure directe de la pression de gonflage.

Mais, il est aussi possible d'utiliser les mesures de la pression de gonflage ainsi que d'une estimation de la température de l'air interne du pneumatique, dans ce cas l'état de gonflage du pneumatique peut être caractérisé par le rapport entre la pression absolue de gonflage et la température absolue. Cette deuxième solution a l'avantage d'améliorer la précision des mesures en atténuant l'effet de phénomènes perturbateurs tels un déséquilibre thermique entre les roues d'un même essieu.

Théoriquement, ce traitement des mesures permet de suivre l'évolution de la quantité d'air présente dans un pneumatique et donc de s'affranchir de la nécessité d'analyser des écarts de mesure de pression entre les pneumatiques homologues d'un ou de plusieurs essieux. Pratiquement, la mesure de l'air interne dans un pneumatique ne peut être qu'une estimation compte tenu de toutes les perturbations dues aux échauffements de freinage ou de roulage et plus généralement à l'environnement des pneumatiques ce qui limite beaucoup l'intérêt pratique d'un tel mode d'exploitation sans pour autant l'interdire.

Pour mettre en oeuvre le procédé de l'invention, on peut utiliser un dispositif de surveillance tel que présenté dans le brevet US 4 703 650 avec un module électronique de mesure de pression par roue transmettant par couplage inductif les signaux de mesure à une unité centrale disposée dans le véhicule et reliée elle-même à un dispositif d'affichage à proximité du conducteur. On peut aussi utiliser un dispositif transmettant par radio les mêmes informations à une unité centrale similaire.

**Revendications**

1. Procédé d'exploitation des signaux dans un système de surveillance des pneumatiques d'un véhicule en roulage, ledit système délivrant pour chaque pneumatique au moins une grandeur caractéristique de l'état de gonflage dudit pneumatique, dans lequel :

   - à partir des mesures effectuées sensiblement en même temps, on compare la grandeur caractéristique d'un pneumatique avec la même grandeur d'au moins un autre pneumatique,
   - on enregistre périodiquement le résultat de cette comparaison pour obtenir une série de valeurs,
   - on déclenche une alerte lorsque la variation dans le temps de cette série de valeurs satisfait une relation prédéterminée.

2. Procédé selon la revendication 1, dans lequel la grandeur caractéristique est constituée de la mesure de la pression de gonflage.

3. Procédé selon l'une des revendications 1 ou 2, dans lequel la comparaison consiste à calculer l'écart de grandeur caractéristique entre les deux pneumatiques d'un même essieu du véhicule.

4. Procédé selon l'une des revendications 1 ou 2, dans lequel la comparaison consiste à :

   - effectuer la somme de la grandeur caractéristique d'un pneumatique d'un premier essieu avec la grandeur caractéristique d'un pneumatique d'un second essieu,

- effectuer la somme de la grandeur caractéristique du second pneumatique du premier essieu avec la grandeur caractéristique du second pneumatique du second essieu, et
- calculer la différence entre ces deux sommes.

**5.** Procédé selon l'une des revendications 1 à 4, dans lequel on déclenche une alerte lorsque la variation dans le temps de ladite série de valeurs dépasse, en valeur absolue, un seuil S donné.

**6.** Procédé selon la revendication 5, dans lequel ledit seuil S est compris entre 3 et 7 % de la valeur nominale de la grandeur caractéristique.

**7.** Procédé selon la revendication 5, dans lequel ledit seuil S est compris entre 3 et 5 % de la valeur nominale de la grandeur caractéristique.

**8.** Procédé selon l'une des revendications 5 à 7, dans lequel :

- on constitue ladite série de valeurs en enregistrant périodiquement les résultats de la comparaison et en conservant les N dernières valeurs couvrant une période totale T,
- on effectue une régression linéaire desdits N enregistrements,
- on calcule la pente a de la droite de régression linéaire, et
- on déclenche une alerte si la pente a est supérieure, en valeur absolue, au rapport entre le seuil S et la période totale T.

**9.** Procédé selon la revendication 8, dans lequel on constitue plusieurs séries de valeurs de périodes totales T différentes pour couvrir l'ensemble des gammes usuelles des cinétiques de dégonflement des pneumatiques des véhicules

**10.** Procédé selon la revendication 9, dans lequel la gamme de périodes couvre de l'ordre de la minute à plusieurs jours.

**11.** Procédé selon l'une des revendications 1 à 10, dans lequel on stocke en mémoire non volatile les séries de valeurs enregistrées.

**12.** Procédé selon la revendication 11, dans lequel on ne tient pas compte dans les séries de valeurs enregistrées de la durée d'arrêt du véhicule.

**13.** Procédé selon l'une des revendications 8 à 12, dans lequel après avoir déclenché une alerte :

- on détermine, parmi les pneumatiques concernés par ladite comparaison, le pneumatique dont la grandeur caractéristique est minimale,
- on calcule, à partir de la valeur de la pente **a**, une estimation du temps nécessaire pour que la grandeur caractéristique dudit pneumatique descende en dessous d'un seuil critique $S_0$,
- on transmet au conducteur dudit véhicule cette estimation.

**14.** Procédé selon la revendication 13, dans lequel on réactualise à chaque nouvel enregistrement d'un résultat de comparaison ladite estimation.

**15.** Procédé selon l'une des revendications 13 ou 14, dans lequel, on demande au conducteur de limiter sa vitesse pour limiter les risques d'éjection en dehors du pneumatique d'un objet responsable de la fuite.

**16.** Procédé selon l'une des revendications 1 à 15, dans lequel la grandeur caractéristique est constituée par les mesures de la pression de gonflage ainsi que d'une estimation de la température de l'air interne du pneumatique et dans lequel l'état de gonflage du pneumatique est **caractérisé par** le rapport entre la pression absolue de gonflage et la température absolue.

**Patentansprüche**

**1.** Verfahren zur Auswertung von Signalen in einem System zur Überwachung der Reifen eines fahrenden Fahrzeugs, wobei das genannte System für jeden Reifen mindestens eine Größe abgibt, die charakteristisch für den Aufpumpzustand des genannten Reifens ist, worin:

- man, von Messungen ausgehend, die im wesentlichen zur gleichen Zeit bewirkt werden, die charakteristische Größe eines Reifens mit derselben Größe mindestens eines anderen Reifens vergleicht,
- man periodisch das Ergebnis dieses Vergleichs aufzeichnet, um eine Reihe von Werten zu erhalten, und
- man einen Alarm auslöst, wenn die Änderung dieser Reihe von Werten im Laufe der Zeit einer vorbestimmten Zuordnung genügt.

**2.** Verfahren nach Anspruch 1, worin die charakteristische Größe von der Messung des Aufpumpdrucks gebildet wird.

**3.** Verfahren nach einem der Ansprüche 1 oder 2, worin der Vergleich darin besteht, die Abweichung der charakteristischen Größe zwischen zwei Reifen ein und derselben Achse des Fahrzeugs zu errechnen.

**4.** Verfahren nach einem der Ansprüche 1 oder 2, worin der Vergleich darin besteht, daß man

- die Summe der charakteristischen Größe eines Reifens einer ersten Achse und der charakteristischen Größe eines Reifens einer zweiten Achse herstellt,
- die Summe der charakteristischen Größe des zweiten Reifens der ersten Achse und der charakteristischen Größe des zweiten Reifens der zweiten Achse herstellt, und
- die Differenz zwischen den beiden Summen errechnet.

**5.** Verfahren nach einem der Ansprüche 1 bis 4, worin man einen Ararm auslöst, wenn die Änderung der genannten Reihe von Werten im Laufe der Zeit einen vorgegebenen Schwellenwert S überschreitet.

**6.** Verfahren nach Anspruch 5, worin der genannte Schwellenwert S zwischen 3% und 7% des Nennwerts der charakteristischen Größe liegt.

**7.** Verfahren nach Anspruch 5, worin der genannte Schwellenwert S zwischen 3% und 5% des Nennwerts der charakteristischen Größe liegt.

**8.** Verfahren nach einem der Ansprüche 5 bis 7, worin man

- die genannte Reihe von Werten dadurch herstellt, daß man periodisch die Vergleichsergebnisse aufzeichnet und die N letzten Werte speichert, die einen Gesamtzeitraum T überdecken,
- eine lineare Regression der genannten N Aufzeichnungen bewirkt,
- man die Neigung a der Geraden der linearen Regression berechnet, und
- man einen Alarm auslöst, wenn die Neigung a im Absolutwert größer ist als das Verhältnis zwischen dem Schwellenwert S und dem Gesamtzeitraum T.

**9.** Verfahren nach Anspruch 8, worin man mehrere Reihen von Werten von verschiedenen Gesamtzeiträumen T bildet, um die Gruppe üblicher Bereiche der kinetischen Verhalten des Druckverlustes von Reifen abzudecken.

**10.** Verfahren nach Anspruch 9, worin der Bereich von Zeiträumen der Größenordnung nach von der Minute bis zu mehreren Tagen überdeckt.

**11.** Verfahren nach einem der Ansprüche 1 bis 10, worin man die Reihen aufgezeichneter Werte nicht-flüchtig speichert.

**12.** Verfahren nach Anspruch 11, worin man die Reihen von Werten, die während des Halts des Fahrzeuges aufgezeichnet wurden, nicht berücksichtigt.

**13.** Verfahren nach einem der Ansprüche 8 bis 12, worin man nach Auslösen eines Alarms

- unter den durch den Vergleich betroffenen Reifen den Reifen bestimmt, dessen charakteristische Größe minimal ist,
- von den Werten der Neigung a ausgehend, eine Abschätzung der Zeit errechnet, die notwendig ist, daß die charakteristische Größe des genannten Reifens unter einen kritischen Schwellenwert $S_0$ absinkt, und
- an den Fahrer des Fahrzeugs diese Abschätzung übermittelt.

**14.** Verfahren nach Anspruch 13, worin man bei jeder neuen Aufzeichnung eines Vergleichsergebnisses die genannte Abschätzung wieder aktualisiert.

**15.** Verfahren nach einem der Ansprüche 13 oder 14, worin man vom Fahrer fordert, seine Geschwindigkeit einzuschränken, um die Gefahren einzuschränken, daß ein Gegenstand, der für die Leckage verantwortlich ist, aus dem Reifen geschleudert wird.

**16.** Verfahren nach einem der Ansprüche 1 bis 15, worin die charakteristische Größe von Messungen des Aufpumpdrucks sowie von einer Abschätzung der Innenlufttemperatur des Reifens gebildet ist, und worin der Aufpumpzustand des Reifens **gekennzeichnet ist durch** das Verhältnis zwischen dem absoluten Aufpumpdruck und der absoluten Temperatur.

**Claims**

**1.** A method for processing signals in a tyre monitoring system of a vehicle during travel, said system delivering for each tyre at least one characteristic variable of the state of inflation of said tyre, in which:

- starting from the measurements effected substantially at the same time, the characteristic variable of a tyre is compared with the same characteristic variable of at least one other tyre,
- the result of this comparison is recorded periodically in order to obtain a series of values,
- an alert is triggered when the variation over time of this series of values satisfies a predetermined relationship.

**2.** A method according to Claim 1, in which the characteristic variable consists of the measurement of the inflation pressure.

**3.** A method according to one of Claims 1 or 2, in which the comparison consists of calculating the deviation in the characteristic variables between the two tyres on the same axle of the vehicle.

**4.** A method according to one of Claims 1 or 2, in which the comparison consists of:

- totalling the characteristic variable of a tyre of a first axle with the characteristic variable of a tyre of a second axle,
- totalling the characteristic variable of the second tyre of the first axle with the characteristic variable of the second tyre of the second axle, and
- calculating the difference between these two totals.

**5.** A method according to one of Claims 1 to 4, in which an alert is triggered when the variation over time of said series of values exceeds a given threshold S in absolute value.

**6.** A method according to Claim 5, in which said threshold S is between 3 and 7% of the rated value of the characteristic variable.

**7.** A method according to Claim 5, in which said threshold S is between 3 and 5% of the rated value of the characteristic variable.

**8.** A method according to one of Claims 5 to 7, in which:

- said series of values is formed by periodically recording the results of the comparison and by retaining the last N values covering a total period T,
- linear regression of said N recordings is effected,
- the gradient a of the straight line of linear regression is calculated, and
- an alert is triggered if the gradient *a* is greater in absolute value than the ratio between the threshold S and the total period T.

**9.** A method according to Claim 8, in which a plurality of series of values of different total periods T is formed to cover all the observed ranges of the deflation kinetics of the tyres of the vehicles.

**10.** A method according to Claim 9, in which the range of periods covers of the order of one minute to several days.

**11.** A method according to one of Claims 1 to 10, in which the series of values recorded are stored in a non-volatile memory.

**12.** A method according to Claim 11, in which no account is taken of the stoppage time of the vehicle in the series of values recorded.

**13.** A method according to one of Claims 8 to 12, in which, once an alert has been triggered:

- of the tyres concerned by this comparison, that tyre whose characteristic variable is minimal is determined,
- there is calculated, from the value of the gradient *a*, an estimate of the time necessary for the characteristic variable of said tyre to drop below a critical threshold $S_0$,
- this estimate is transmitted to the driver of said vehicle.

**14.** A method according to Claim 13, in which said estimate is updated upon each new recording of a comparison result.

**15.** A method according to one of Claims 13 or 14, in which the driver is asked to limit his speed in order to reduce the risks of ejection of an object responsible for the leak from the tyre.

**16.** A method according to one of Claims 1 to 15, in which the characteristic variable is formed by the measurements of the inflation pressure and an estimate of the temperature of the internal air of the tyre, and in which the state of inflation of the tyre is **characterised by** the ratio between the absolute inflation pressure and the absolute temperature.

Fig.1

EP 0 786 361 B1

Fig. 2